# EUROPÄISCHE PATENTSCHRIFT

(11) **EP 4 079 609 B1**
(45) Veröffentlichungstag und Bekanntmachung des Hinweises auf die Patenterteilung: **14.02.2024**
(21) Anmeldenummer: 22163842.2
(22) Anmeldetag: 23.03.2022
(51) Int. Cl.: B62D 29/00, B62D 29/04, B62D 33/04, B60P 3/04, B62D 63/06

(54) **AUFBAU FÜR EINEN PFERDEANHÄNGER, PFERDEANHÄNGER MIT EINEM SOLCHEN AUFBAU SOWIE BAUKASTENSYSTEM UND VERFAHREN ZUR HERSTELLUNG EINES SOLCHEN AUFBAUS**
STRUCTURE FOR A HORSE TRAILER, TRAILER WITH SUCH A STRUCTURE AND MODULAR SYSTEM AND METHOD FOR MANUFACTURING SUCH A STRUCTURE
STRUCTURE POUR UNE REMORQUE À CHEVAUX, REMORQUE À CHEVAUX DOTÉE D'UNE TELLE RSTRUCTURE, AINSI QUE SYSTÈME MODULAIRE ET PROCÉDÉ DE FABRICATION D'UNE TELLE STRUCTURE

(30) Priorität: 19.04.2021 DE 102021109763
(43) Veröffentlichungstag der Anmeldung: 26.10.2022
(73) Patentinhaber: Humbaur GmbH, 86368 Gersthofen (DE)
(72) Erfinder:
(74) Vertreter: Meissner Bolte Partnerschaft mbB

(56) Entgegenhaltungen:
- EP-A2- 2 716 528
- DE-U1- 8 106 717
- DE-U1-202005 002 422
- US-A- 5 769 478

## Beschreibung

Die Erfindung betrifft einen Aufbau für einen Pferdeanhänger, einen solchen Pferdeanhänger sowie ein Baukastensystem und ein Verfahren zur Herstellung eines derartigen Aufbaus. Anhängeraufbauten dieser Art sind aus der Praxis bekannt.

Anhängeraufbauten werden aus unterschiedlichen Gründen von Kunden gekauft.

Das Design und Materialauswahl eines Pferdeanhängers sind wesentlicher Bestandteil der Kaufentscheidung. Insbesondere besteht vielfach der Wunsch, das Design zu individualisieren. Viele Kunden legen Wert auf eine hohe Stabilität des Aufbaus, wogegen andere Kunden ein kostengünstiges Modell bevorzugen.

Bei der heute sehr standardisierten Serienfertigung von Aufbauten für Pferdeanhänger ist eine Individualisierung jedoch nur bedingt möglich.

Individuelle Anpassungen müssen vielmehr nach dem eigentlichen Herstellungsprozess vorgenommen werden, was zu erhöhten Kosten führt.

DE 81 06 717 U1 und EP 2 716 528 A2 offenbaren jeweils Aufbauten für Pferdeanhänger, die aus einzelnen Modulen gebildet sind, wobei diese die Seitenwände, das Dach und eine Vorderwand bilden können. Die Seitenwände und die Vorderwand weisen jeweils dieselbe Höhe auf und werden von einem Dachmodul abgedeckt, das selbst auch Seitenabschnitte aufweist, die fluchtend zu den Seitenwänden verlaufen.

Die Aufgabe der Erfindung besteht darin, einen Aufbau für einen Pferdeanhänger anzugeben, der einfach und kostengünstig individualisierbar ist. Ferner ist es Aufgabe der Erfindung, einen Pferdeanhänger mit einem solchen Aufbau anzugeben. Der Erfindung liegt auch die Aufgabe zu Grunde, ein Baukastensystem und ein Verfahren zur Herstellung eines solchen Aufbaus bereitzustellen.

Erfindungsgemäß wird diese Aufgabe im Hinblick auf den Aufbau durch den Gegenstand des Patentanspruchs 1, im Hinblick auf den Pferdeanhänger durch den Gegenstand des Patentanspruchs 9, im Hinblick auf das Baukastensystem durch den Gegenstand des Patentanspruchs 10 und im Hinblick auf das Herstellungsverfahren durch den Gegenstand des Patentanspruchs 13 gelöst.

So beruht die Erfindung auf dem Gedanken, einen Aufbau für einen Pferdeanhänger anzugeben, wobei der Aufbau zwei Seitenwände, eine Vorderwand und ein Dach aufweist. Die Seitenwände, die Vorderwand und das Dach werden erfindungsgemäß aus einzelnen Modulbauteile gebildet, die miteinander verbunden sind. Zumindest die Vorderwand ist erfindungsgemäß aus wenigstens drei Modulbauteilen zusammengefügt.

Die Verbindung der einzelnen Modulbauteile kann kraftschlüssig, formschlüssig und/oder stoffschlüssig erfolgen. Besonders bevorzugt ist es, die einzelnen Modulbauteile stoffschlüssig zu verbinden, beispielsweise zu verkleben. Alternativ oder zusätzlich können die Modulbauteile auch vernietet und/oder verschraubt werden. Dies gilt für alle Ausführungsformen der Erfindung.

Durch die Verwendung von Modulbauteilen lassen sich unterschiedliche Aufbauten in schneller Abfolge nacheinander erzeugen. Beispielsweise kann eines der Modulbauteile der Vorderwand mit einer hohen Eintrittstür ausgestattet sein, um einen einfachen Zustieg in den Innenraum des Aufbaus zu ermöglichen. Alternativ können Modulbauteile vorgesehen sein, die eine niedrige Tür aufweisen, so dass im Innenraum des Pferdeanhängeraufbaus Platz für Innenausbauteile verbleibt. Es ist auch möglich, ein Modulbauteil mit einer Tür für die rechte Fahrzeugseite und ein Modulbauteil mit Tür für die linke Fahrzeugseite vorzusehen. So kann in der Herstellung entschieden werden, ob der Aufbau eine Tür auf der rechten Fahrzeugseite oder auf der linken Fahrzeugseite erhält.

Bei einer bevorzugten Ausgestaltung der Erfindung weisen die Modulbauteile dieselben Materialien auf. Auch vorteilhaft ist es, wenn die Modulbauteile unterschiedliche Materialien aufweisen. So können beispielsweise die Seitenwände durch Aluminiumprofile gebildet sein, wogegen die VorderwandModulbauteile und das Dach aus einem Kunststoffmaterial gebildet sind.

Die Vorderwand weist erfindungsgemäß ein Frontmodulbauteil und zwei seitliche Eckmodulbauteile auf. Durch die seitlichen Eckmodulbauteile an der Vorderwand lässt sich die Vorderwand besonders individuell an vorgegebene Anforderungen, beispielsweise Kundenwünsche, anpassen.

Die Eckmodulteile verbinden das Frontmodulteil mit einer Seitenwand. Die Eckmodulbauteile können zusätzlich auch eine Verbindung zum Dach herstellen. Im Wesentlichen können die Eckmodulbauteile ein Bindeglied zwischen dem Frontmodulbauteil, einer Seitenwand und dem Dach bilden. Das Frontmodulbauteil kann die Eckmodulbauteile miteinander und mit dem Dach verbinden.

Bei der Erfindung ist vorgesehen, dass wenigstens ein Eckmodulbauteil eine Eintrittstüre und/oder Stauraumklappe aufweist. Insbesondere kann eine Eintrittstüre vorgesehen sein, die von einer Person stehend durchschritten werden kann. So kann die Eintrittstüre eine Höhe von wenigstens 1,9 m, insbesondere wenigstens 2,0 m, insbesondere 2,1 m aufweisen.

Das Eckmodulbauteil weist erfindungsgemäß eine Höhe auf, die höher als ein Seitenwandmodulbauteil ist. So kann das Eckmodulbauteil bis in einen Dachbereich reichen, wodurch das Eckmodulbauteil eine ausreichend große Höhe erhält, um eine hohe Eintrittstüre aufzunehmen. Die Eintrittstüre wird dann als hoch bezeichnet, wenn sie im aufrechten Gang durchschritten werden kann. Eine Stauraumklappe kann hingegen vorgesehen sein, um beispielsweise den Zugang zu einem Sattelhalterstauraum zu ermöglichen. Die Stauraumklappe kann ebenfalls als Türe ausgebildet sein. Üblicherweise weist die Stauraumklappe jedoch eine geringere Höhe als eine Eintrittstüre auf.

Das Frontmodulbauteil kann eine Sicke aufweisen, die sich im Dach fortsetzt. Die Sicke dient einerseits zur Stabilisierung des Frontmodulbauteils und somit insgesamt der Vorderwand. Andererseits kann die Sicke genutzt werden, um ein Dachflächenfenster, beispielsweise aus Kunststoff, einzusetzen. Ein solches, großflächiges Dachflächenfenster wird auch als Panoramafenster bezeichnet. Auf diese Weise gelangt viel Licht in den Innenraum des Aufbaus, so dass auf eine zusätzliche künstliche Beleuchtung weitgehend verzichtet werden kann.

Die Seitenwände können aus Aluminium oder aus Kunststoff gebildet sein. Beide Varianten sind möglich und können individuell ausgetauscht werden. Aluminiumseitenwände haben den Vorteil, dass sie äußerst stabil sind. Solche Seitenwände können aus einzelnen Aluminiumlatten aufgebaut sein, die übereinander angeordnet werden. Auf der Seitenwand sitzt das Dach auf. Kostengünstiger und leichter sind Seitenwände, die aus Kunststoff gebildet sind. Diese bieten zwar eine geringere Stabilität, sind jedoch individueller formbar und können so an verschiedene Designvorstellungen angepasst werden.

Das Dach und die Vorderwand, insbesondere das Frontmodulbauteil und die Eckmodulbauteile, sind vorzugsweise aus einem Kunststofflaminat gebildet. Da diese Bauteile für die Stabilität des Aufbaus keine tragende Rolle spielen, kommt Aluminium hier üblicherweise nicht zum Einsatz. Allerdings ermöglicht die Kunststoffbauweise eine optisch ansprechendere Linienführung bei den Vorderwandmodulbauteilen und dem Dachmodulbauteil. Dabei kann dasselbe Kunststofflaminat eingesetzt werden, das beispielsweise auch für die Seitenwände verwendet wird.

Im Allgemeinen kann vorgesehen sein, dass das Dach aus einem einzigen Modulbauteil, dem Dachmodulbauteil, gebildet ist. Das Dachmodulbauteil weist vorzugsweise einen in etwa U-förmigen Querschnitt auf, wobei die offenen Enden der Schenkel des U-Profils auf den Seitenwänden aufliegen.

Die Seitenwände umfassen vorzugsweise ebenfalls ein einziges Modulbauteil, wenn sie aus Kunststoff bzw. einem Kunststofflaminat gefertigt sind. Sofern die Seitenwände aus Aluminium gebildet sind, weisen sie vorzugsweise mehrere Aluminiumlatten, insofern Seitenwandmodulbauteile, auf, die aufeinander gesteckt und vorzugsweise miteinander rastverbunden sind.

Die Vorderwand ist vorzugsweise aus drei Modulbauteilen zusammengesetzt, die den Vorderwandmodulbau bilden. Dabei wird zwischen zwei Eckmodulbauteilen und einem Frontmodulbauteil unterschieden. Die Eckmodulbauteile und das Frontmodulbauteil weisen eine Höhe auf, die höher ist als die Seitenwandmodulbauteile bzw. die Seitenwand. So reichen die Eckmodulbauteile bis in den Dachbereich hinauf. Ebenso reicht das Frontmodulbauteil bis in den Dachbereich hinauf. Die Eckmodulbauteile sind somit mit einer Rückseite sowohl mit der Seitenwand als auch mit dem Dachmodulbauteil verbunden. Bevorzugt ist vorgesehen, dass das Dachmodulbauteil und die Seitenwandmodulbauteile dieselbe Länge aufweisen, so dass an eine gemeinsame vordere Kante des zusammengesetzten Dach-/Seitenwandbauteils die Vorderwand angesetzt werden kann.

Ein nebengeordneter Aspekt der Erfindung betrifft einen Pferdeanhänger, insbesondere zur gesetzlich zulässigen Verbindung mit einem Pkw als Zugfahrzeug, mit einem zuvor beschriebenen Aufbau. Konkret kann der Pferdeanhänger eine zulässige Gesamtmasse von höchstens 3,5 Tonnen, insbesondere höchstens 3,0 Tonnen, insbesondere höchstens 2,8 Tonnen, insbesondere höchstens 2,5 Tonnen, insbesondere höchstens 2,3 Tonnen, insbesondere höchstens 2,0 Tonnen, insbesondere höchstens 1,8 Tonnen, aufweisen.

Ein weiterer nebengeordneter Aspekt der Erfindung betrifft ein Baukastensystem zur Herstellung unterschiedlicher vorbeschriebener Aufbauten, wobei das Baukastensystem verschiedene Seitenwandmodulbauteile und verschiedene Vorderwandmodulbauteile sowie wenigstens ein Dachmodulbauteil aufweist, wobei die Modulbauteile jeweils komplementäre Verbindungsflächen oder Verbindungskanten aufweisen.

Im Wesentlichen können also unterschiedlich gestaltete Vorderwandmodulbauteile und unterschiedlich gestaltete Seitenwandmodulbauteile bereitgestellt werden. Bei der Montage des Fahrzeugaufbaus für einen Pferdeanhänger können dann individuell verschiedene Modulbauteile miteinander kombiniert werden. Auf diese Weise können im Rahmen einer Serienfertigung schnell individuelle Aufbauten für Pferdeanhänger hergestellt werden, ohne dass dies hohe Kosten verursacht. Die Verbindung zwischen den einzelnen Modulbauteilen erfolgt vorzugsweise durch Verkleben. Alternativ oder zusätzlich kann die Verbindung über Schrauben oder Nieten erfolgen. Dabei können die einzelnen Modulbauteile auch aus unterschiedlichen Materialien, beispielsweise Aluminium oder Kunststofflaminat, gebildet sein. Die Verbindung ist jedenfalls ausreichend stabil, um einen nach Kundenwünschen konfigurierten Fahrzeugaufbau für einen Pferdeanhänger zu produzieren.

Die Vorderwandmodulbauteile können insbesondere unterschiedliche Eckmodulbauteile und wenigstens ein Frontmodulbauteil aufweisen. Die Eckmodulbauteile bieten ein besonders hohes Spektrum an Individualisierung. Hier bestehen oft Kundenwünsche im Hinblick auf zusätzliche Fenster, Höhe der Eintrittstüre oder Art und Weise der Stauraumklappe. Um alle diese Kundenwünsche berücksichtigen zu können, können verschiedene standardisierte Eckmodulbauteile bereitgestellt sein, wobei für jeden herzustellenden Aufbau eines Pferdeanhängers individuell die unterschiedlichen Modulbauteile miteinander kombiniert werden.

Dabei ist nicht ausgeschlossen, dass auch unterschiedliche Dachmodulbauteile vorrätig gehalten werden, so dass auch das Dach individuell an Kundenwünsche angepasst werden kann. Beispielsweise können Dachmodulbauteile mit großen oder kleinen Dachfenstern, mit oder ohne Zwangsbelüftungsanlage, mit oder ohne Dachspoiler usw. bereitgestellt werden. Je nach gewünschter Konfiguration des Kunden können dann die entsprechenden Dachmodulbauteile verwendet werden, um einen Aufbau für einen Fahrzeuganhänger herzustellen.

Bei einer bevorzugten Ausführungsform des erfindungsgemäßen Baukastensystems können sich wenigstens die unterschiedlichen Seitenwandmodulbauteile durch verschiedene Materialien, insbesondere Aluminium oder Kunststoff, voneinander unterscheiden. Insofern können sich die einzelnen Modulbauteile, aus welchen der gesamte Aufbau zusammengesetzt ist, nicht nur durch ihr äußeres Design, sondern auch durch das verwendete Material unterscheiden. Wie bereits erwähnt, bietet Aluminium eine höhere Stabilität, wogegen Kunststofflaminat ein ansprechenderes Design ermöglicht und zu einer Gewichtsreduktion führt.

Im Rahmen der vorliegenden Anmeldung wird außerdem ein Verfahren zur Herstellung eines individuellen Aufbaus für einen Pferdeanhänger offenbart und beansprucht, wobei das Verfahren insbesondere zur Herstellung eines zuvor beschriebenen Pferdeanhängeraufbaus geeignet ist. Bei dem Verfahren kommt das zuvor erläuterte Baukastensystem zum Einsatz, wobei aus diesem Baukastensystem zwei Seitenwandmodulbauteile, zwei Eckmodulbauteile, ein Frontmodulbauteil und ein Dachmodulbauteil ausgewählt, zusammengesetzt und miteinander verbunden werden. Die Verbindung erfolgt vorzugsweise durch Kleben.

Das hier beschriebene Herstellungsverfahren ermöglicht also eine schnelle und im Rahmen einer Serienfertigung variantenreiche individuelle Konfiguration des Aufbaus für einen Pferdeanhänger. So kann auf Kundenwünsche schnell und umfassend reagiert werden. Die Herstellungskosten bleiben dabei weiterhin niedrig auf dem Niveau von Produktionskosten einer Serienfertigung.

Die Erfindung wird im Folgenden anhand eines Ausführungsbeispiels unter Bezugnahme auf die beigefügten, schematischen Zeichnungen näher erläutert. Darin zeigen
- Fig. 1: eine perspektivische Ansicht eines erfindungsgemäßen Aufbaus eines Pferdeanhängers mit Blickrichtung von einer Beifahrerseite nach einem bevorzugten Ausführungsbeispiel;
- Fig. 2: eine perspektivische Ansicht des Aufbaus gemäß Fig. 1 mit Blickrichtung von einer Fahrerseite;
- Fig. 3: eine perspektivische Ansicht des Aufbaus gemäß Fig. 1 mit Blickrichtung von einer Heckseite;
- Fig. 4: eine perspektivische Ansicht eines Pferdeanhängers mit einem erfindungsgemäßen Aufbau nach einem bevorzugten Ausführungsbeispiel mit Blickrichtung von einer Fahrerseite; und
- Fig. 5: eine perspektivische Ansicht des Pferdeanhängers gemäß Fig. 4 mit Blickrichtung von einer Beifahrerseite.

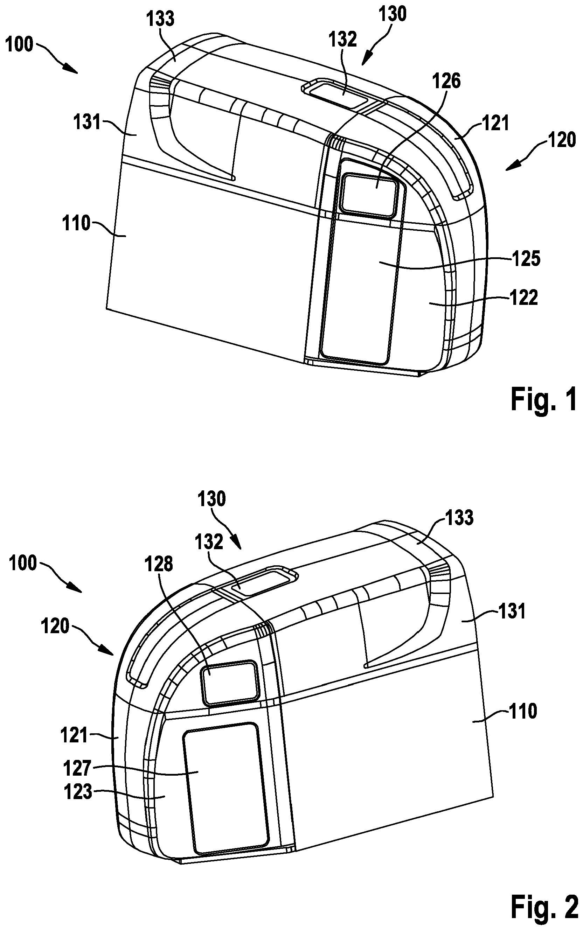

Fig. 1 zeigt einen Aufbau 100 für einen Pferdeanhänger mit zwei Seitenwänden 110, einer Vorderwand 120 und einem Dach 130. Die Seitenwände 110, die Vorderwand 120 und das Dach 130 sind aus einzelnen Modulbauteilen gebildet. Die Modulbauteile sind miteinander verbunden, wobei die Verbindung kraftschlüssig, formschlüssig und/oder stoffschlüssig erfolgen kann. Insbesondere kann die Verbindung durch Verkleben, Schrauben und/oder Nieten gebildet werden. Zumindest die Vorderwand 120 ist aus wenigstens drei Modulbauteilen zusammengefügt.

Konkret weist die Seitenwand 110 bei dem Ausführungsbeispiel gemäß Fig. 1 bis 3 jeweils ein einziges Seitenwandmodulbauteil auf, das aus einem Kunststofflaminat gebildet ist. Die beiden gegenüberliegend angeordneten Seitenwände 110 sind dabei identisch ausgebildet. Jede Seitenwand hat eine im Wesentlichen rechteckige Form und ist mit dem Dach 130 und der Vorderwand 120 verbunden.

Das Dach 130 ist ebenfalls aus einem einzigen Modulbauteil gebildet. Konkret weist das Dach 130 einen im Wesentlichen U-förmigen Querschnitt auf, wobei zwei Schenkel 131 vorgesehen sind, die auf den Seitenwänden 110 aufliegen und mit diesen fest verbunden, vorzugsweise verklebt, verschraubt und/oder vernietet, sind. Das Dach 130 umfasst heckseitig einen Dachspoiler 133. Andere Dachformen mit anders gestalteten Dachspoilern oder ohne Dachspoiler sind ebenfalls möglich. Im vorderen Bereich umfasst das Dach eine Dachsicke 132, die zur vorderen Kante des Dachs 130 offen ist. Das gesamte Dach 130 ist vorzugsweise aus einem Kunststofflaminat einstückig gebildet.

Die Vorderwand 120 ist durch drei Modulbauteile gebildet. Insbesondere ist ein Frontmodulbauteil 121 vorgesehen, das sich unmittelbar an das Dach 130 anschließt. Dabei reicht das Frontmodulbauteil 121 bis in die Schenkel 131 des Dachs 130. Das Frontmodulbauteil 121 ist durch zwei Eckmodulbauteile flankiert.

Konkret ist ein rechtes Eckmodulbauteil 122 vorgesehen, das auf einer in Fahrtrichtung rechten Seite, also beifahrerseitig, des Aufbaus 100 angeordnet ist. Das rechte Eckmodulbauteil 122 ist mit einer vorderen Kante der rechten Seitenwand 110 und einer vorderen Kante des rechten Schenkels 131 des Dachs 130 verbunden. Außerdem ist das rechte Eckmodulbauteil 122 mit dem Frontmodulbauteil 121 verbunden.

Das rechte Eckmodulbauteil 122 umfasst eine Eintrittstüre, die ein in die Eintrittstüre 125 integriertes Türfenster 126 umfasst. Die Eintrittstüre 125 weist eine Höhe auf, die größer als die Höhe der Seitenwand 110 ist. Insbesondere reicht die Eintrittstüre 125 bis in ein oberes Segment des rechten Eckmodulbauteils 122, wobei sich dieses obere Segment an den rechten Schenkel 131 des Dachs 130 anschließt. Die Eintrittstüre 125 weist so eine Höhe auf, die es ermöglicht, dass eine Person im aufrechten Gang die Eintrittstüre 125 durchschreiten kann.

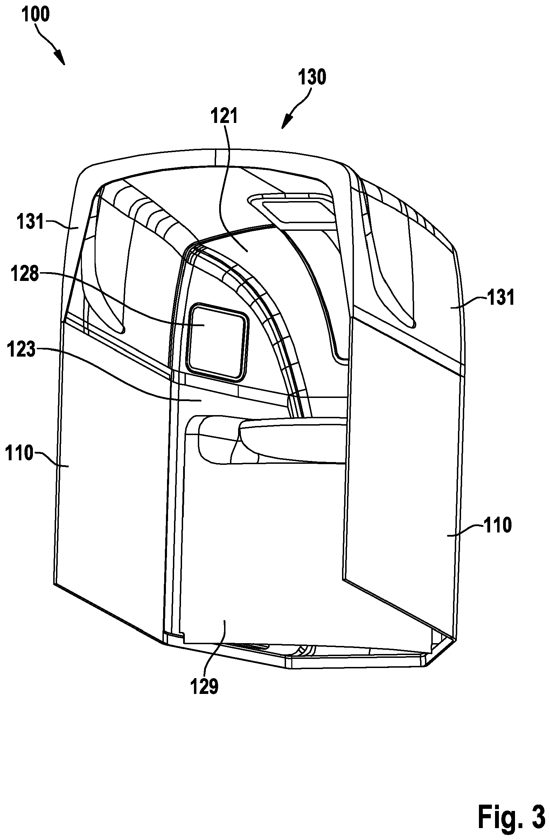

Das linke Eckmodulbauteil 123 ist in Fig. 2 gezeigt. Da linke Eckmodulbauteil 123 weist anstelle einer Eintrittstüre 125 eine Stauraumklappe 127 auf. Die Stauraumklappe 127 hat eine Höhe, die kleiner als die Höhe der linken Seitenwand 110 ist. Oberhalb der Stauraumklappe 127 ist ein Seitenfenster 128 in das linke Eckmodulbauteil 123 integriert. Das Seitenfenster 128 ist vorzugsweise auf gleicher Höhe angeordnet wie das Türfenster 126 des rechten Eckmodulbauteils 122. Über die Stauraumklappe besteht Zugang zu einem Stauraum innerhalb des Aufbaus 100, insbesondere einer Sattelhalterbox 129 (Fig. 3).

Fig. 3 zeigt vom Heck aus gesehen den Aufbau 100, wobei auf eine Heckklappe aus darstellerischen Gründen verzichtet wurde. So ist der Blick in den Innenraum des Aufbaus 100 frei. Es ist erkennbar, dass sich die beiden Seitenwände 110 direkt an die Schenkel 131 des Dachs 130 anschließen. Das Dach 130 und die Seitenwände 110 weisen dieselbe Länge auf, so dass sich die Vorderwand 120, die das Frontmodulbauteil 121, das rechte Eckmodulbauteil 122 und das linke Eckmodulbauteil 123 umfasst, unmittelbar an eine U-förmige vordere Kante anschließen kann, wobei diese Kante durch das Dach 130, dessen Schenkel 131 und die Seitenwände 110 gebildet ist.

In Fig. 3 ist auch gut erkennbar, dass im Bereich der Vorderwand 120 eine Sattelhalterbox 129 montiert ist. Die Sattelhalterbox 129 kann ebenso wie die Vorderwandmodulbauteile und das Dach 130 aus einem Kunststofflaminat gebildet sein.

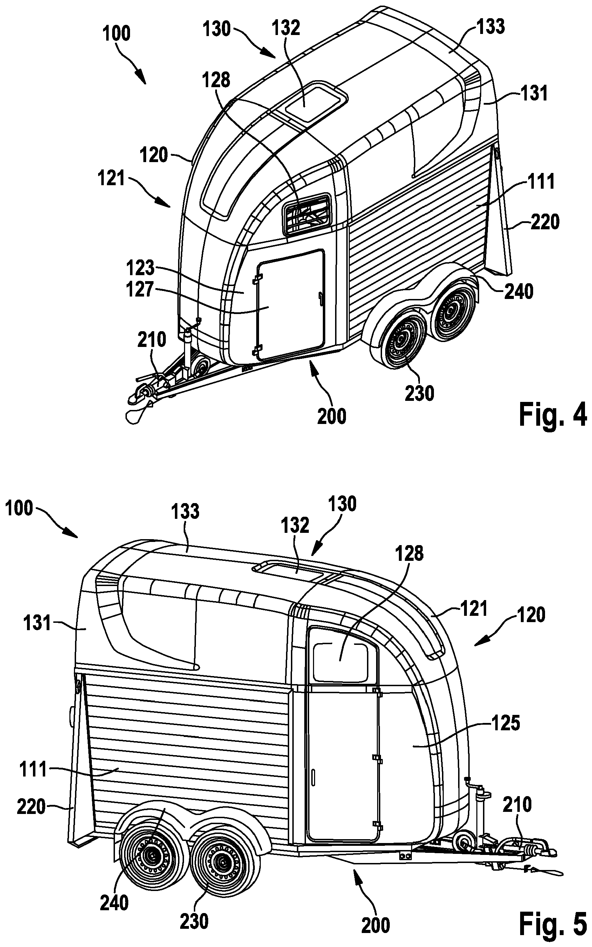

Die Fig. 4 und 5 zeigen einen Aufbau 100, der auf einem Fahrgestell 200 montiert ist. Insofern zeigen die Fig. 4 und 5 einen Pferdeanhänger mit einem Aufbau 100, wobei der Aufbau 100 weitgehend gemäß dem Ausführungsbeispiel nach Fig. 1-3 ausgebildet ist. Der Aufbau 100 gemäß Fig. 4 und 5 unterscheidet sich lediglich dadurch von dem Aufbau 100 gemäß Fig. 1-3, dass die Seitenwände 110 bei dem Ausführungsbeispiel gemäß Fig. 4 und 5 aus Aluminium gebildet sind.

Konkret weisen die Seitenwände 110 gemäß Fig. 4 und 5 mehrere Aluminiumlatten 110 auf, die übereinander angeordnet und miteinander schnappverbunden sind. Die Seitenwand 110 ist wie bei den vorherigen Ausführungsbeispielen mit dem Dach 130 bzw. dessen Schenkeln 131 und dem jeweils benachbarten Eckmodulbauteil 122, 123 verbunden, insbesondere verklebt. Darüber hinaus entspricht der Aufbau 100 gemäß Fig. 4 und 5 dem Aufbau 100 gemäß Fig. 1-3.

Der Aufbau 100 ist in den Fig. 4 und 5 auf einem Fahrgestell 200 montiert, wobei das Fahrgestell 200 eine Deichsel 210, zwei Beleuchtungsträger 220, und Räder 230 aufweist. Der Pferdeanhänger gemäß Fig. 4 und 5 ist insoweit als Doppelachsanhänger ausgebildet. Jeweils zwei Räder 230 sind durch einen Kotflügel 240 überdeckt, der mit der jeweiligen Seitenwand 110 verbunden ist.

Der Beleuchtungsträger 220 ist heckseitig montiert. Jeder Beleuchtungsträger 220 weist im Wesentlichen die Form eines rechtwinkligen Dreiecks auf, dessen lange Kathete sich über die gesamte Höhe der Seitenwand 110 erstreckt. Der Beleuchtungsträger 220 nimmt eine heckseitige Beleuchtungseinrichtung auf.

Der Aufbau 100 lässt sich besonders leicht individualisieren, da er aus unterschiedlichen Modulbauteilen zusammengesetzt ist. Die einzelnen Modulbauteile können in unterschiedlichen Varianten vorrätig gehalten werden. So können unterschiedliche Eckmodulbauteile 122, 123, unterschiedliche Frontmodulbauteile 121, unterschiedliche Dachmodulbauteile und unterschiedliche Seitenwandmodulbauteile bereitgestellt werden. Beispielsweise kann das Frontmodulbauteil 121 mit oder ohne Sicke für ein Panoramafenster angeboten werden. Sofern beide Varianten des Frontmodulbauteils 121 bei der Fertigung des Aufbaus 100 bereitstehen, kann individuell nach Kundenwunsch das entsprechende Frontmodulbauteil 121 eingesetzt werden. So lassen sich Kundenwünsche kostengünstig im Rahmen einer Serienfertigung realisieren.

Insofern bildet der Aufbau 100 ein Ergebnis eines Baukastensystems, bei welchem unterschiedliche, jedoch standardisierte, Bauteile bereitgestellt werden, die anschließend in der individuellen gewünschten Konfiguration zusammengesetzt werden können. Der Aufbau 100 ist somit modular aufgebaut.

### Bezugszeichen

- 100: Aufbau
- 110: Seitenwand
- 111: Aluminiumlatte
- 120: Vorderwand
- 121: Frontmodulbauteil
- 122: rechtes Eckmodulbauteil
- 123: linkes Eckmodulbauteil
- 124: Sicke
- 125: Eintrittstüre
- 126: Türfenster
- 127: Stauraumklappe
- 128: Seitenfenster
- 129: Sattelhalterbox
- 130: Dach
- 131: Schenkel
- 132: Dachsicke
- 133: Dachspoiler
- 200: Fahrgestell
- 210: Deichsel
- 220: Beleuchtungsträger
- 230: Rad
- 240: Kotflügel

## Patentansprüche

1. Aufbau (100) für einen Pferdeanhänger mit zwei Seitenwänden (110), einer Vorderwand (120) und einem Dach (130), wobei die Seitenwände (110), die Vorderwand (120) und das Dach (130) aus einzelnen Modulbauteilen gebildet sind, die miteinander verbunden sind, und wobei wenigstens die Vorderwand (120) aus wenigstens drei Modulbauteilen (121, 122, 123) zusammengefügt ist, wobei die Vorderwand (120) ein Frontmodulbauteil (121) und zwei seitliche Eckmodulbauteile (122, 123) aufweist, **dadurch gekennzeichnet, dass** wenigstens ein Eckmodulbauteil (122, 123) eine Eintrittstüre (125) und/oder eine Stauraumklappe (127) aufweist und wobei das Frontmodulbauteil (121) und die Eckmodulbauteile (122, 123) eine Höhe aufweisen, die höher als die Seitenwand (110) ist.

2. Aufbau nach Anspruch 1,
**dadurch gekennzeichnet, dass**
die Modulbauteile dieselben oder unterschiedliche Materialien aufweisen.

3. Aufbau nach Anspruch 1 oder 2,
**dadurch gekennzeichnet, dass**
die Eckmodulbauteile (122, 123) das Frontmodulbauteil (121) mit jeweils einer Seitenwand (110) verbinden.

4. Aufbau nach einem der vorhergehenden Ansprüche,
**dadurch gekennzeichnet, dass**
das Frontmodulbauteil (121) die Eckmodulbauteile (122, 123) miteinander und mit dem Dach (130) verbindet.

5. Aufbau nach einem der vorhergehenden Ansprüche,
**dadurch gekennzeichnet, dass**
die Eintrittstüre (125) eine Höhe von wenigstens 1,9 m, insbesondere wenigstens 2,0 m, insbesondere 2,1 m aufweist.

6. Aufbau nach einem der vorhergehenden Ansprüche,
**dadurch gekennzeichnet, dass**
das Frontmodulbauteil (121) eine Sicke (124) aufweist, die sich im Dach (130) fortsetzt.

7. Aufbau nach einem der vorhergehenden Ansprüche,
**dadurch gekennzeichnet, dass**
die Seitenwände (110) aus Aluminium oder aus Kunststoff gebildet sind.

8. Aufbau nach einem der vorhergehenden Ansprüche,
**dadurch gekennzeichnet, dass**
das Dach (130) und die Vorderwand (120), insbesondere das Frontmodulbauteil (121) und die Eckmodulbauteile (122, 123) , aus einem Kunststofflaminat gebildet sind.

9. Pferdeanhänger, insbesondere zur gesetzlich zulässigen Verbindung mit einem PKW als Zugfahrzeug, mit einem Aufbau (100) nach einem der vorhergehenden Ansprüche.

10. Baukastensystem zur Herstellung unterschiedlicher Aufbauten (100) für Pferdeanhänger gemäß einem der Ansprüche 1 bis 8, mit verschiedenen Seitenwandmodulbauteilen und verschiedenen Vorderwandmodulbauteilen und wenigstens einem Dachmodulbauteil, die jeweils komplementäre Verbindungsflächen oder Verbindungskanten aufweisen.

11. Baukastensystem nach Anspruch 10,
**dadurch gekennzeichnet, dass**
die Vorderwandmodulbauteile unterschiedliche Eckmodulbauteile (122, 123) und wenigstens ein Frontmodulbauteil (121) aufweisen.

12. Baukastensystem nach Anspruch 10 oder 11,
**dadurch gekennzeichnet, dass**
sich wenigstens die unterschiedlichen Seitenwandmodulbauteile durch verschiedene Materialien, insbesondere Aluminium oder ein Kunststofflaminat, voneinander unterscheiden.

13. Verfahren zur Herstellung eines individuellen Aufbaus für einen Pferdeanhänger nach einem der Ansprüche 1 bis 8, bei dem aus einem Baukastensystem nach Anspruch 11 oder 12 zwei Seitenwandmodulbauteile, zwei Eckmodulbauteile (122, 123), ein Frontmodulbauteil (121) und ein Dachmodulbauteil ausgewählt, zusammengesetzt und miteinander verbunden werden.

## Claims

1. Structure (100) for a horse trailer, with two side walls (110), a front wall (120) and a roof (130), wherein the side walls (110), the front wall (120) and the roof (130) are formed from individual modular components that are connected to each other, and wherein at least the front wall (120) is assembled from at least three modular components (121, 122, 123), wherein the front wall (120) includes a front modular component (121) and two lateral corner modular components (122, 123), **characterized in that**
at least one corner modular component (122, 123) includes an entry door (125) and/or a storage space hatch (127), and wherein the front modular component (121) and the corner modular components (122, 123) have a height that is higher than the side wall (110).

2. Structure according to Claim 1,
**characterized in that**
the modular components consist of the same or different materials.

3. Structure according to Claim 1 or 2,
**characterized in that**
the corner modular components (122, 123) each connect the front modular component (121) to a side wall (110).

4. Structure according to any one of the preceding claims, **characterized in that**
the front modular component (121) connects the corner modular components (122, 123) to each other and to the roof (130).

5. Structure according to any one of the preceding claims, **characterized in that**
the entry door (125) has a height of at least 1.9 m, in particular at least 2.0 m, in particular 2.1 m.

6. Structure according to any one of the preceding claims, **characterized in that**
the front modular component (121) has a bead (124) which continues in the roof (130).

7. Structure according to any one of the preceding claims, **characterized in that**
the side walls (110) are made of aluminium or plastic.

8. Structure according to any one of the preceding claims, **characterized in that**
the roof (130) and the front wall (120), in particular the front modular component (121) and the corner modular components (122, 123), are formed from a plastic laminate.

9. Horse trailer, in particular for legally permissible attachment to a car as towing vehicle, with a structure (100) according to any one of the preceding claims.

10. Modular system for manufacturing different structures (100) for horse trailers according to any one of Claims 1 to 8, with different side wall modular components and different front wall modular components and at least one roof modular component, each having complementary connecting surfaces or connecting edges.

11. Modular system according to Claim 10,
**characterized in that**
the front wall modular components have different corner modular components (122, 123) and at least one front modular component (121).

12. Modular system according to Claim 10 or 11, **characterized in that**
at least the different side wall modular components differ from each other in their different materials, in particular aluminium or a plastic laminate.

13. Method for manufacturing an individual structure for a horse trailer according to any one of Claims 1 to 8, in which two side wall modular components, two corner modular components (122, 123), a front modular component (121) and a roof modular component are selected from a modular system according to Claim 11 or 12, assembled and connected together.

## Revendications

1. Structure (100) pour une remorque à chevaux avec deux parois latérales (110), une paroi avant (120) et un toit (130), sachant que les parois latérales (110), la paroi avant (120) et le toit (130) sont formés de composants modulaires individuels, qui sont reliés entre eux et sachant qu'au moins la paroi avant (120) est composée d'au moins trois composants modulaires (121, 122, 123), sachant que la paroi avant (120) comporte un composant modulaire avant (121) et deux composants modulaires d'angle latéraux (122, 123), **caractérisée en ce qu'**
au moins un composant modulaire d'angle (122, 123) comporte une porte d'entrée (125) et/ou un hayon de compartiment de rangement (127) et sachant que le composant modulaire avant (121) et les composants modulaires d'angle (122, 123) comportent une hauteur qui est plus élevée que la paroi latérale (110).

2. Structure selon la revendication 1,
**caractérisée en ce que**
les composants modulaires comportent des matériaux analogues ou différents.

3. Structure selon la revendication 1 ou 2,
**caractérisée en ce que**
les composants modulaires d'angle (122, 123) relient le composant modulaire avant (121) respectivement à une paroi latérale (110).

4. Structure selon l'une quelconque des revendications précédentes,
**caractérisée en ce que**
le composant modulaire avant (121) relie les composants modulaires d'angle (122, 123) entre eux et au toit (130) .

5. Structure selon l'une quelconque des revendications précédentes,
**caractérisée en ce que**
la porte d'entrée (125) comporte une hauteur d'au moins 1,9 m, en particulier d'au moins 2,0 m, en particulier de 2,1 m.

6. Structure selon l'une quelconque des revendications précédentes,
**caractérisée en ce que**
le composant modulaire avant (121) comporte une moulure de renfort (124) qui se prolonge dans le toit (130).

7. Structure selon l'une quelconque des revendications précédentes,
**caractérisée en ce que**
les parois latérales (110) sont formées en aluminium ou en matière plastique.

8. Structure selon l'une quelconque des revendications précédentes,
**caractérisée en ce que**
le toit (130) et la paroi avant (120), en particulier le composant modulaire avant (121) et les composants modulaires d'angle (122, 123) sont formés à partir d'un produit laminé de matière plastique.

9. Remorque à chevaux, en particulier pour la liaison légalement autorisée à un véhicule de tourisme en tant que véhicule de traction, avec une structure (100) selon l'une quelconque des revendications précédentes.

10. Système modulaire pour la fabrication de structures différentes (100) pour remorques à chevaux selon l'une quelconque des revendications 1 à 8, avec différents composants modulaires de paroi latérale et différents composants modulaires de paroi avant et au moins un composant modulaire de toit, qui comportent respectivement des surfaces de liaison ou des bords de liaison complémentaires.

11. Système modulaire selon la revendication 10,
**caractérisé en ce que**
les composants modulaires de paroi avant comportent des composants modulaires d'angle (122, 123) différents et au moins un composant modulaire avant (121).

12. Système modulaire selon la revendication 10 ou 11, **caractérisé en ce qu'**
**au moins** les différents composants modulaires de paroi latérale se différencient les uns des autres par des matériaux différents, en particulier l'aluminium ou un produit laminé de matière plastique.

13. Procédé de fabrication d'une structure individuelle pour une remorque à chevaux selon l'une quelconque des revendications 1 à 8, pour lequel deux composants modulaires de paroi latérale, deux composants modulaires d'angle (122, 123), un composant modulaire avant (121) et un composant modulaire de toit sont sélectionnés, assemblés et reliés l'un à l'autre à partir d'un système modulaire selon la revendication 11 ou 12.
